# EUROPEAN PATENT SPECIFICATION

(11) **EP 0 563 459 B1**
(45) Date of publication and mention of the grant of the patent: **29.10.1997**
(21) Application number: 92200960.0
(22) Date of filing: 03.04.1992
(51) Int. Cl.: H04B 1/46

(54) **Wireless intercom**
Schnurlose Wechselsprechanlage
Interphone sans fil

(43) Date of publication of application: 06.10.1993
(73) Proprietor: Chen, Shih-Chung, Feng Yuan, Taichung (TW)
(72) Inventor: Chen, Shih-Chung, Feng Yuan, Taichung (TW)
(74) Representative: Coyle, Philip Aidan

(56) References cited:
- DE-A- 2 641 660
- DE-B- 2 806 778
- GB-A- 2 027 566
- US-A- 4 178 548

## Description

### BACKGROUND OF THE INVENTION

### 1. Field of the invention

The present invention relates to a voice-controlled speaker microphone of a wireless intercom, especially to a voice-controlled speaker microphone of a wireless intercom having a self-feed function in order to achieve the objective to avoid the need for external power and to avoid fast consumption of batteries.

### 2. Description of the Prior Art

The present invention is directed to a voice-controlled speaker microphone of a wireless intercom.

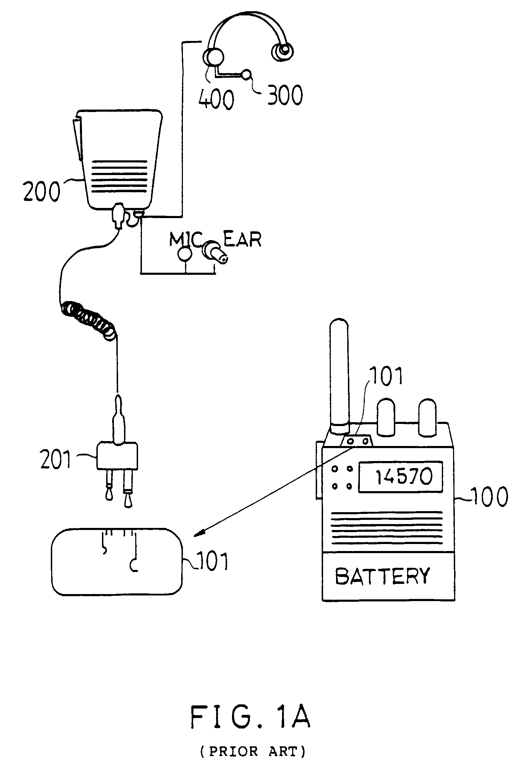

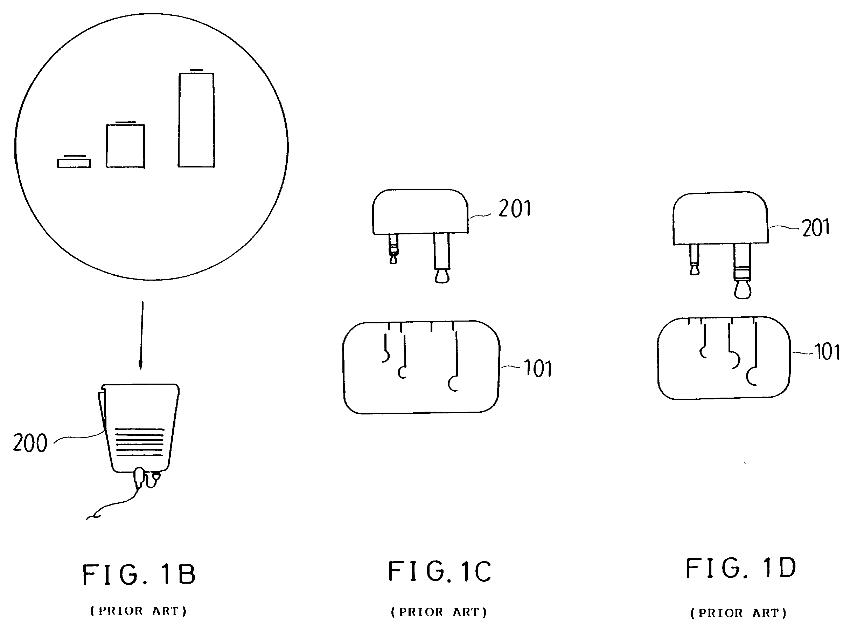

As shown in Fig.1A, a conventional wireless intercom is composed of a transceiver 100, a sound controlled speaker microphone 200 which is connecting to the transceiver 100 by inserting a plug 201 connecting with speaker microphone 200 into a receptacle 101 on the transceiver 100. The kinds of the design and disadvantages of the above mentioned voice-controlled are as follows:
1) The first kind of conventional voice-controlled speaker microphone 200 is shown in Fig. 1B. When the transceiver 100 supplys no electric energy needed for voice-controlled circuit of speaker microphone 200 to operate, the speaker microphone 200 must be installed with a battery so as to supply the above mentioned energy. In nowadays, the best battery can supply electric energy only for 130 hrs, it is not convenient because the users have to replace it very frequently.
2) The second kind and the third kind of conventional wireless intercom are shown in Fig. 1C and Fig. 1D. Inside the transceiver 100, there is an electric source supplying electric energy for voice controlled speaker microphone 200. The input/output receptacle 101 then is designed to let the small pin or big pin of plug 201 receive electric energy supplied by the electric source inside the transceiver 100. In this circumstance, because every company's design (including the plug 201, the receptacle 101 and electric supplying device) is different each other, the voice controlled speaker microphone 200 or transceiver 100 produced by different company can not replace each other. It is also very inconvenient to people who uses it.
3) Referred to Figure 1 again, in using the conventional sound controlled speaker microphone of wireless intercom, it is necessary to add an earphone 400 and microphone 300 so as to prevent the interference of feedback due to it's not able to obtain the receiving & sending signals to control the receiving & sending conditions of sound controlled speaker microphone during voice receiving and voice sending.

Its installations are then very complicated and make the users very inconvenient.

### SUMMARY OF THE INVENTION

In view of the above-mentioned defects of the conventional wireless intercom, the present invention is firstly to provide a voice controlled speaker microphone of wireless intercom, it comprises a specified voice controlled circuit, by merely using the bias flowing through the manual switch (PTT) and condenser microphones, it can be used as electric energy needed by the voice controlled circuit of speaker microphone of the present invention, it then does not have the trouble of replacing batteries frequently, its economical effects are highly improved.

According to the speaker microphone of wireless intercom of the present invention, it can be used without the necessity for the transceiver to supply electric source for used as the electric energy required by voice controlled circuit. Then the input/output receptacle of transceiver is not necessary to consider the output of electric source. The special design is not necessary, if the pins of plug is able to insert into the receptacle, any kinds of transceiver can be replaced for uses, this is another object of the present invention.

According to the speaker microphone of wireless intercom of the present invention, its voice controlled speaker microphone is able to obtain receiving & sending signals to control the receiving & sending conditions of voice controlled circuit.

Consequently, it can be used to operate the works of voice receiving and voice sending without external earphone and microphone . The cost is greatly lower, it is a further object of the present invention.

A more complete understanding of these and other features and advantages of the present invention will become apparent from a careful consideration of the following detailed description of certain embodiments illustrated in the accompanying drawings.

### BRIEF DESCRIPTION OF TEE DRAWINGS

Figs. 1A to 1D illustrate a conventional wireless intercom transceiver;
Fig. 2 is a block diagram showing the electrical circuit of the present invention;
Fig. 3 is a schematic diagram showing an embodiment of the circuit of the present invention;
Figs. 4A to 4D are schematic diagrams showing the waveform of the segmented voltage of the invention on working time ; and
Fig. 5 is a schematic diagram showing an embodiment of the present invention.

### DESCRIPTION OF THE PREFERRED EMBODIMENTS

As shown in Fig. 1A to 1D, the constructions and disadvantages of the speaker microphone of conventional wireless intercom are described as above and will not be repeated here.

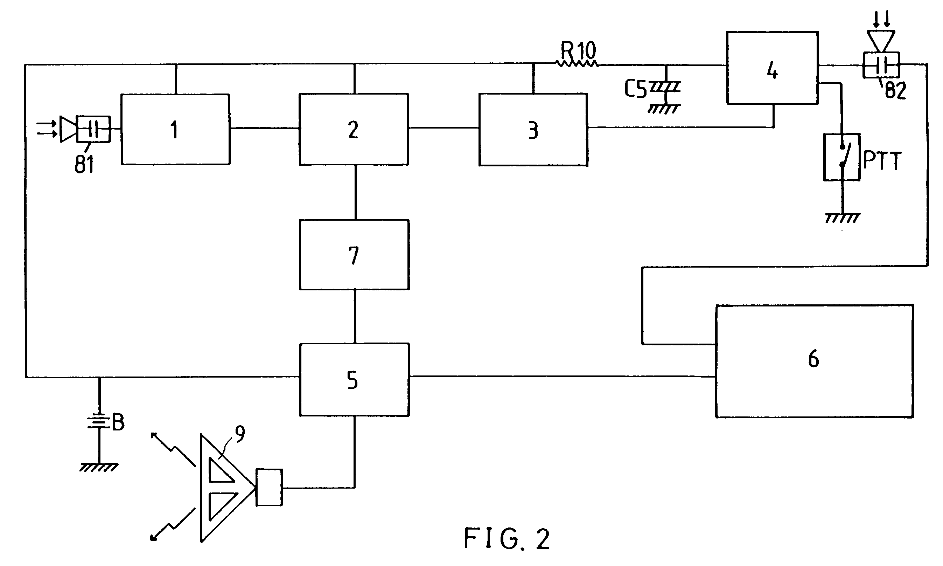

Fig. 2 is a block diagram of the whole assembly of the present invention. It is clearly shown in said figure that the wireless intercom transceiver according to the invention mainly comprises a first condenser mic 81, an amplifying circuit 1, an integrating circuit 2, a switching characteristic booster circuit 3, a transistor switching circuit 4, a second condenser mic 82, a voltage multiplying rectifying circuit 5 , a transceiver control circuit 7 and a speaker 9, wherein the first condenser mic 81 is connected with the amplifying circuit 1 thereby the audio signal is amplified to the degree of ready for integration; the amplifying circuit 1 is output to the integrating circuit 2 for the purpose of integrating the audio signal output from the amplifying circuit to a hi-low signal; the output of which is in turn connected to a switching characteristic booster circuit 3 which may boosters the switching characteristics of the hi-low signal into a square wave; the latter is in turn via a resistor K10, a condenser C5 connected to the transistor switching circuit 4 which is output to the second condenser mic 82 and a manual switch PTT; the integrating circuit 2 is output to the voltage multiplying rectifying circuit 5 and the latter is in turn output to the transceiver control circuit 7; and the speaker 9 also connects to the output of the voltage multiplier rectifier 5; besides, the second condenser mic 82 and the voltage multipling rectifying circuit 5 are further connected to a transceiver 6.

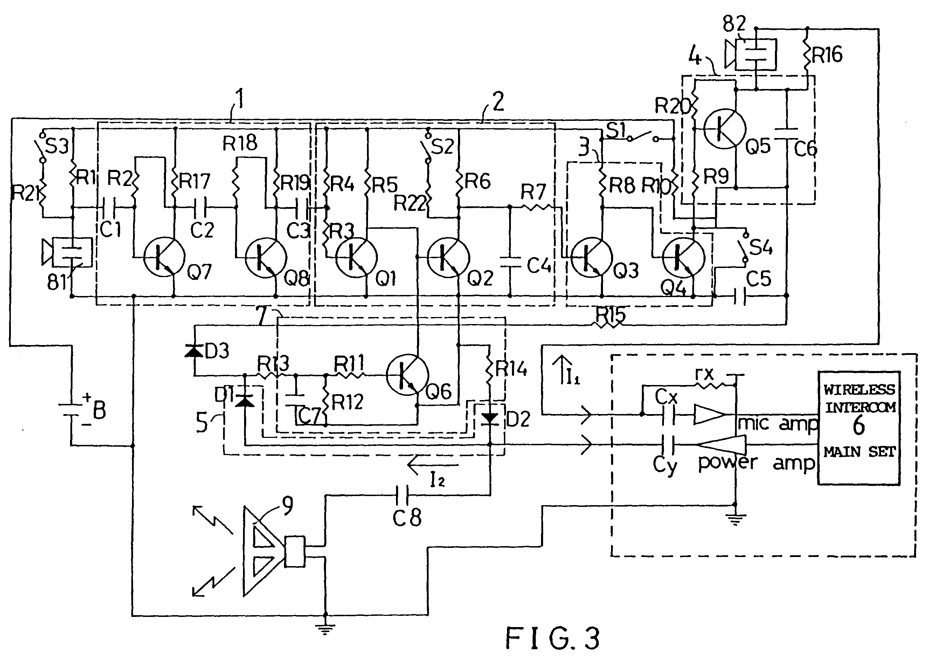

Referring the embodiment shown in Fig. 3, the amplifying circuit 1 is composed of transistors Q7, Q8 in combined with capacitors C1, C2, C3 and resistors R1, R2, R17, R18, R19; the intergrating circuit 2 is composed of transistors Q1, Q2, and resistors R3, R4, R5, R6, R7 in combination with condenser C4 as will as a switch S2; the switching characteristic booster circuit 3 is mainly composed of transistors Q3, Q4 and resistors R8, R9; the switching circuit 4 is consisted of a transistor Q5, a resistor R20 and a capacitor C6; the voltage multipling rectifying circuit 5 is composed of a pair of diodes D1 and D2; and the transceiver control circuit 7 consists of a transistor Q6, resistors R11, R12 and a condenser C7; additionally, which is provided with a diode D3 to prevent flow back through the transistor Q6.

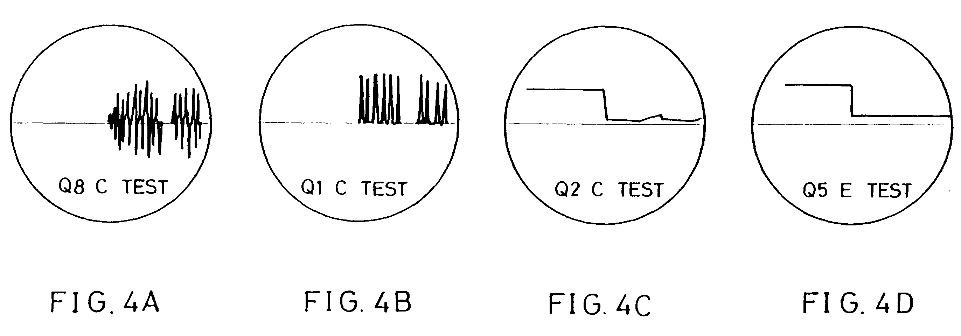

With reference to Fig. 3, while the wireless intercom transceiver of the invention being transmitting, the audio signal received by the condenser mic 81 is amplified by the transistors Q7, Q8 of the amplifying circuit 1 to give a one hundred times of gain (the waveform thereof is as shown in Fig. 4A) and then sent to the transistor Q1 of the integrating circuit 2. Normally, said transistor Q1 is kept in saturation. While receiving, the transistor Q1 gets the pulse (the waveform thereof is as shown is Fig. 4B) of the audio signal by the collector thereof and sents to the transistor Q2, following integration to obtain a hi-low potential (its waveform is as shown in Fig. 4C ); after that the hi-low potential's waveform is smoothed into a square wave (the waveform thereof is as shown in Fig. 4D) by means of the switching characteristic booster circuit 3 in order to drive the transistor Q5 in the switching circuit 4 to achieve the objective transmission.

Upon this time, the second condenser mic 82 is connected in parallel with the resistor R16 and then to the microphone input node of the transceiver or wireless intercom main set 6. The bias current of the transceiver flows through the second condenser mic 82, the resistor R16 in parallel, and the transistor Q5, thereafter is filtered while passing through the capacitor C5 and then via R10 charging to the battery B to give a charging current I1 of 0.6mA to 1.0mA.

In receiving, the speaker 9 is driven by use of the couple capacitor output from the OTL amplifier inside of the transceiver 6 and the capacitor C8 connected in serial with the speaker 9 in the circuit of the invention. At the junction between the couple capacitor Cy thereof and the capacitor C8 in the circuit of the present invention, the divided voltage is taken as a DC level. The DC level is maintained through multiplying the audio signal by the diodes D1, D2 in the voltage multiplying rectifying circuit 5. And the DC level via the resistor R13 is integrated by the capacitor C7 and then applied to the transistor Q6 of the transceiver control circuit 7 to control the base of the transistor Q2 in the integrating circuit 2 in such a manner that the audio control signal can be turned off upon receiving to make the transceiving smooth. This DC level passing through the diode D3 is further filtered by the resistor R15 and the capacitor C5 and charging to the battery via the resistor R10 to give a charging current I2 of 1mA to 30mA. The resistors R14, R15 have such a limitation effect that the voltage multiplying rectifying circuit 5 will not effect the receiving quality.

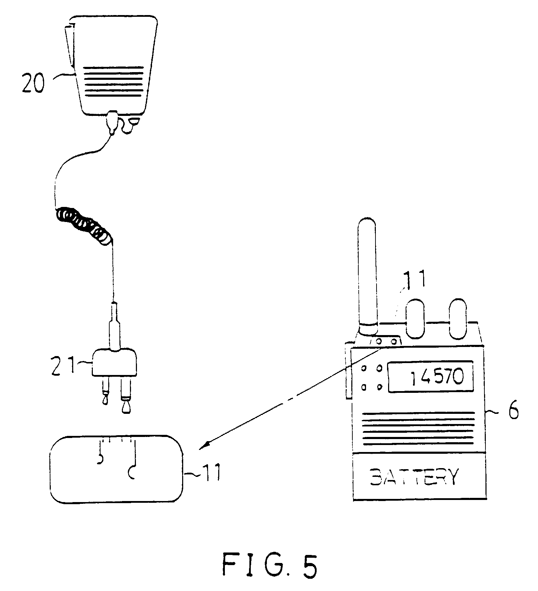

The supplier current I1 and I2 provides to and is used by the voice-controllable transceiver of the invention (the working current is 0.3mA ), then the transceiver claimed has a self-feed function and no external power source is required. As shown is Fig.5, it is not necessary for the transceiver 6 to provide an electric source as the energy required by its sound controlled circuit. The input/output receptacle 11 of transceiver 6 then is not necessary to consider the output of electric sound, its special design is not necessary, if the pins of plug is able to insert into the receptacle, any kinds of wireless intercom transceiver manufactured by different companies can be replaced for uses.

In view of the above illustration, it can be seen that the wireless intercom of the present invention can really exert the effects of external powerless and self-feed and also elliminate the drawbacks such as, e.g. external power source required and frequent battery replacement of the conventional ones.

The present invention has been described with reference to the preferred embodiments. As will be evident to those skilled in the art, various modifications of this invention can be made or followed in the light of the foregoing disclosure without departing from the scope of the claims.

## Claims

1. A wireless intercom system including a wireless intercom main set (6) and a voice control circuit, wherein said voice control circuit comprises:
a first condenser microphone (81);
an amplifying circuit (1) connected to the first condenser microphone (81);
an integrating circuit (2) connected to an output node of the amplifying circuit (1);
a switching characteristic booster circuit (3) connected to an output node of the integrating circuit (2);
a transistor switching circuit (4) connected to an output node of the switching characteristic booster circuit (3);
a second condenser microphone (82) connected to an output node of the said first transistor switching circuit (4); and
a voltage multiplier rectifier circuit (5) connected to said output node of the integrating circuit (2) and having an input node connected to a voltage output of said main unit (6);
a battery (B) connected to supply power for the voice control circuit;
a speaker (9) connected via said input node of the rectifier circuit (5) to said driving voltage output of said main unit (6);
means for supplying a condenser microphone bias voltage from the main set (6) to the second microphone (82) and to the battery (B) to give a charging current to the battery (B), and means for supplying a driving voltage to the speaker (9) and to the battery (B) to give a charging current to the battery (B), thereby eliminating the need for an external power supply and frequent replacement of the battery (B).

## Patentansprüche

1. Schnurlose Wechselsprechanlage mit einem schnurlosen Wechselsprechanlagen-Hauptapparat (6) und einer Sprachsteuerungsschaltung, wobei die genannte Sprachsteuerungsschaltung folgendes umfaßt:
ein erstes Kondensatormikrophon (81);
eine Verstärkungsschaltung (1), die mit dem ersten Kondensatormikrophon (81) verbunden ist;
eine integrierte Schaltung (2), die mit einem Ausgangsknotenpunkt der Verstärkungsschaltung (1) verbunden ist;
eine Zusatzschaltung (3) mit Schaltverhalten, die mit einem Ausgangsknotenpunkt der integrierten Schaltung (2) verbunden ist;
ein Transistorschaltnetz (4), das mit einem Ausgangsknotenpunkt der ersten Zusatzschaltung (3) mit Schaltverhalten verbunden ist;
ein zweites Kondensatormikrophon (82), das mit einem Ausgangsknotenpunkt des genannten ersten Transistorschaltnetzes (4) verbunden ist; und
eine Spannungsvervielfacher-Gleichrichterschaltung (5), die mit dem genannten Ausgangsknotenpunkt der integrierten Schaltung (2) verbunden ist und einen Eingangsknotenpunkt aufweist, der mit einem Spannungsausgang des genannten Hauptgerätes (6) verbunden ist;
eine Batterie (B), die mit Speisestrom für die Sprachsteuerungsschaltung verbunden ist;
einen Lautsprecher (9), der über den genannten Eingangsknotenpunkt der Gleichrichterschaltung (5) mit dem genannten Treiberspannungsausgang des genannten Hauptgeräts (6) verbunden ist;
ein Mittel zum Anlegen einer KondensatormikrophonRuhespannung von dem Hauptgerät (6) an das zweite Mikrophon (82) und an die Batterie (B), um der Batterie (B) einen Ladestrom zuzuführen, und ein Mittel zum Anlegen einer Treiberspannung an den Lautsprecher (9) und an die Batterie (B), um der Batterie (B) einen Ladestrom zuzuführen, so daß sich eine externe Stromversorgung und ein häufiges Auswechseln der Batterie (B) erübrigen.

## Revendications

1. Système d'interphone sans fil comprenant un combiné principal d'interphone sans fil (6) et un circuit de commande vocale, dans lequel ledit circuit de commande vocale comprend :
un premier microphone à condensateur (81) ;
un circuit amplificateur (1) connecté au premier microphone à condensateur (81) ;
un circuit d'intégration (2) connecté à un noeud de sortie du circuit amplificateur (1) ;
un circuit survolteur à caractéristique de commutation (3) connecté à un noeud de sortie du circuit d'intégration (2) ;
un circuit de commutation de transistor (4) connecté à un noeud de sortie du circuit survolteur à caractéristique de commutation (3) ;
un deuxième microphone à condensateur (82) connecté à un noeud de sortie dudit premier circuit de commutation de transistor (4) ; et
un circuit redresseur multiplicateur de tension (5) connecté audit noeud de sortie du circuit d'intégration (2) et ayant un noeud d'entrée connecté à une sortie de tension de ladite unité principale (6) ;
une pile (B) connectée à une alimentation du circuit de commande vocale ;
un haut-parleur (9) connecté par l'intermédiaire dudit noeud d'entrée du circuit redresseur (5) à ladite sortie de tension d'entraînement de ladite unité principale (6) ;
des moyens destinés à délivrer une tension de polarisation de microphone à condensateur provenant du combiné principal (6) au deuxième microphone (82) et à la pile (B) afin de donner un courant de charge à la pile (B), et des moyens destinés à délivrer une tension d'entraînement au haut-parleur (9) et à la pile (B) afin de donner un courant de charge à la pile (B), éliminant ainsi la nécessité d'une alimentation extérieure et le remplacement fréquent de la pile (B).
